**Europäisches Patentamt**

**European Patent Office**

**Office européen des brevets**

(19)

(11) Numéro de publication: **0 005 089 B1**

# FASCICULE DE BREVET EUROPEEN

(12)

(45) Date de publication du fascicule de brevet: **01.07.81**

(51) Int. Cl.³: **B 60 P 3/08, B 61 D 3/02**

(21) Numéro de dépôt: **79400188.3**

(22) Date de dépôt: **22.03.79**

(54) Véhicule pour le transport d'autres véhicules.

(30) Priorité: **26.04.78 FR 7812376**

(43) Date de publication de la demande:
**31.10.79 Bulletin 79/22**

(45) Mention de la délivrance du brevet:
**01.07.81 Bulletin 81/26**

(84) Etats Contractants Désignés:
**BE CH DE GB IT LU NL**

(56) Documents cités:
**DE - C - 898 554**
**FR - A - 1 549 788**
**FR - A - 2 022 565**
**FR - A - 2 036 851**
**FR - A - 2 148 069**
**GB - A - 711 289**
**US - A - 3 145 043**
**US - A - 4 068 772**

(73) Titulaire: **SOCIETE NOUVELLE DES ATELIERS DE VENISSIEUX**
**chemin du Génie Boite Postale No 4**
**F-69631 Venissieux Cédex (FR)**

(72) Inventeur: **Durand, Roger**
**124 route Neuve**
**F-69540 Irigny (FR)**

(74) Mandataire: **Dupuy, Louis et al,**
**CREUSOT-LOIRE 15 rue Pasquier**
**F-75383 Paris Cedex 8 (FR)**

Courier Press, Leamington Spa, England.

## Véhicule pour le transport d'autres véhicules

La présente invention se rapporte à un véhicule roulant comportant un plancher inférieur fixe et au moins un plancher supérieur mobile verticalement, destiné au transport d'autres véhicules, en particulier d'automobiles.

Dans le domaine ferroviaire, on connaît les wagons à deux planchers dont le plancher supérieur est entièrement mobile verticalement; cett mobilité est obtenue au moyen d'engins de levage appropriés, tels que paire de treuils, vérins hydrauliques, etc. Dans tous les cas, les engins de levage agissent aux deux extrémités du pont. Ces dispositifs connus entrainent des manoeuvres longues, souvent pénibles, et le véhicule porte-automobiles qui les utilise est compliqué puisque deux treuils indépendants sont nécessaires á chaque extrémité d'un pont mobile.

Dans le domaine routier, on connaît les remorques destinées au transport de camions de différentes longueurs et comportant un plancher supérieur composé de deux planchers mobiles indépendants et mis bout-à-bout, telles que par exemple des remorques selon le brevet USA 3 145 043. Pour de tels dispositifs, le réglage en hauteur s'effectue, pour au moins un desdits planchers mobiles, à l'aide d'un vérin de levage fixé au plancher inférieur fixe et agissant par soulèvement de bas en haut en un endroit dudit plancher mobile. Ces dispositifs sont d'entretien coûteux et engendrent des efforts considérables sur le châssis, donné que toute la force due au soulèvement s'exerce en un seul point de celui-ci.

L'invention se rapporte à un véhicule de transport d'automobiles, ou de transport d'autres véhicules du même type, de conception mécanique plus simple, donc moins coûteuse à la réalisation et à l'entretien, que les dispositifs connus jusqu'alors, et pour lequel les efforts de levage du plancher supérieur mobile sont mieux répartis sur le chassis.

Le véhicule roulant destiné au transport d'autres véhicles sur au moins deux niveaux conforme à l'invention est du type comportant un chassis, un plancher inférieur fixe, une superstructure, au moins un plancher supérieur mobile verticalement dont le réglage en hauteur est effectué par un dispositif de levage agissant, par l'intermédiaire d'une transmission à distance, en un seul endroit dudit plancher mobile, et est caractérisé en ce que' la superstructure est reliée rigidement au chassis par deux paires de montants, du moins une desdites paires étant rentrée par rapport à l'extrémité correspondante et étant munie d'orifices d'ancrage, superposés, dudit plancher supérieur mobile, ledit plancher mobile s'entendant sur toute la longueur du véhicule, en ce que ledit endroit d'action dudit dispositif de levage est situé entre le centre de gravité du plancher mobile et l'extrémité du véhicule située du côté de ladite paire de montants rentrée, et en ce que le dispositif de levage comporte un treuil, ou analogue, fixé audit plancher inférieur, le dispositif de transmission à distance associé étant constitué par au moins un câble de levage s'enroulant autour dudit treuil, puis autour d'au moins une première poulie de renvoi à l'horizontale placée sur la superstructure entre ladite paire de montants rentrée et l'extrémité correspondante du véhicule puis, après un parcours horizontal, autour d'au moins une deuxième poulie de renvoi, à angle droit et vers le bas, située à la verticale dudit endroit d'accrochage.

Avantageusement par ailleurs, ledit ou lesdits câbles de soulèvement du plancher supérieur mobile est ou sont accroché(s) audit plancher mobile en un point ou en des points situés sur une même transversale tel(s) que l'endroit d'action, pris dans le sens longitudinal, du dispositif de levage soit situé aux environs du tiers de la partie du plancher mobile située entre son centre de gravité et son extrémité située du côte de ladite paire de montants rentrée, ce qui permet de bien répartir les efforts de levage sur la superstructure, de part et d'autre de ladite paire de montants et en appui sur celle-ci.

L'invention sera mieux comprise à l'aide de la description suivante d'un exemple de réalisation, en référence aux dessins annexés dans lesquels:
— La figure 1 est une vue en élévation latérale d'un demi-wagon articulé porte-automobiles selon l'invention
— La figure 2 est une vue de l'arrière du demi-wagon de la figure 1.

Sur les figures, on reconnaît un demi-wagon articulé porte-automobiles comportant:
— une superstructure 1 reliée de manière rigide à deux montants d'extrémité 2 et deux montants 3, avantageusement, les montants 2 sont minces et permettent de ce fait le chargement de petits véhicules même au droit de ces montants. Par ailleurs, comme on le voit sur le dessin, les montants 3 sont rentrés longitudinalement vers l'intérieur par rapport à l'extrémité correspondante.
— un chassis 4 sur lequel est fixé le plancher inférieur fixe 5, et sur lequel les deux paires de montants (2, 3) sont fixés de manière rigide.
— un essieu médian 6 et un essieu arrière 7.

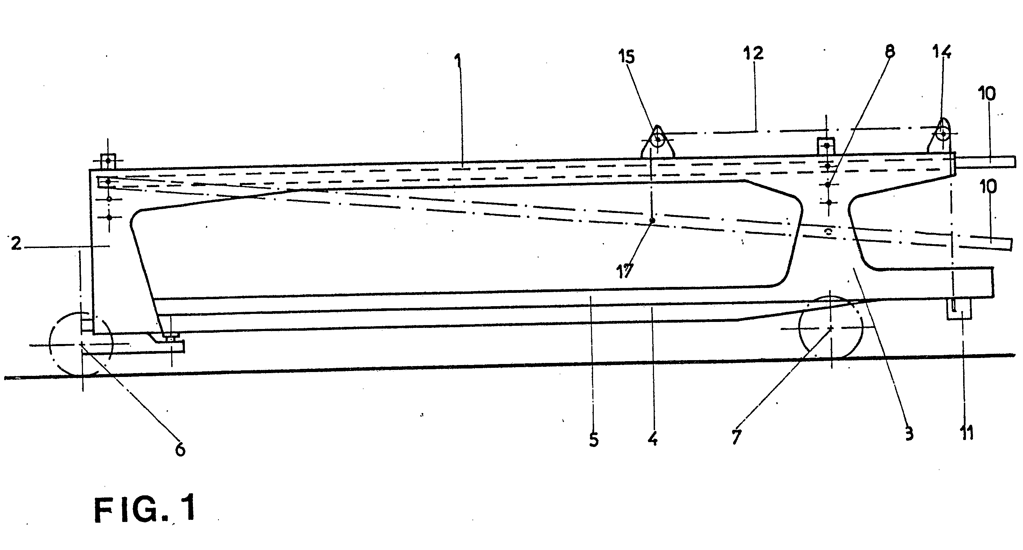

Au droit de chacun des montants sont percés des orifices superposés 8, destinés à recevoir des broches de verrouillage 9 du plancher supérieur mobile 10 que l'on a représenté sur la figure 1 dans une première position verrouillée en traits pleins, et dans une position inclinée intermédiaire non verrouillée en traits mixtes.

La référence 11 désigne un treuil classique fixé au plancher inférieur 5 par exemple à l'extrémité arrière de celui-ci et qui agit, par l'intermédiaire de deux câbles (12, 13), situés de part et d'autre du véhicule, et de poulies de renvoi (14, 15, 18, 16), tous ces éléments étant positionnés comme représenté sur les dessins, sur un seul endroit d'action, 17 du plancher 10, constitué par une largeur de celui-ci et situé préférentiellement, par rapport au centre de gravité dudit plancher 10, du côté du treuil 11 en un point choisi pour pouvoir effectuer au mieux les manoeuvres qui seront explicitées ci-dessous, en particulier en répartissant au mieux les efforts de levage sur le chassis d'ensemble, et préférentiellement aux environs du tiers de la partie du plancher 10 située entre le centre de gravite et la partie arrière dudit plancher.

Le fonctionnement du dispositif de l'invention est le suivant:

Le plancher 10 étant verrouillé dans une de ses positions horizontales, par exemple celle de la figure 1, si l'on veut par exemple le descendre, on déverrouille un des côtés sans déverrouiller l'autre, on le fait descendre jusqu'aux orifices 8 correspondant à la position désirée, en le faisant pivoter autour du côté verrouillé, on le fixe par des broches dans ces nouveaux orifices, puis on déverouille l'autre côté, on le fait descendre et on le broche pareillement. Avantageusement, le plancher 10 comporte, au droit des montants, des butées 19, qui permettent son guidage lors de son déplacement vertical.

On remarquera que le plancher supérieur 10 peut pivoter autour d'une ou plusieurs positions situées sur le montant central 2 jusqu'à venir toucher le quai en bout à son autre extrémité et servir ainsi de rampe de chargement: la position représentée en traits mixtes est une position intermédiaire correspondant à cette manoeuvre.

En raison des angles minimes nécessaires pour passer d'une position du plancher à une autre, au cours de chaque pivotement, il ne sera pas en général nécessaire d'ovaliser les trous 8, la faible déviation étant largement compensée par les jeux.

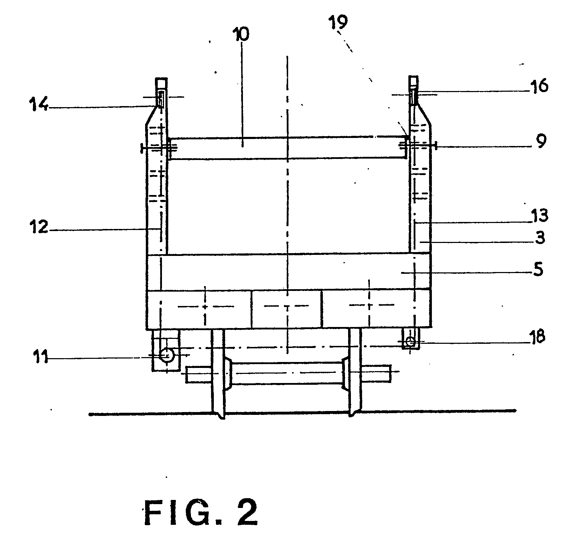

Par ailleurs, comme on le voit sur la figure 2, l'invention permet de conserver une structure telle qu'elle coopère à la resistance du châssis dans les efforts de flexion, de charge verticale, ou de compression. En effet, les axes d'articulation du plancher supérieur sont en même temps des points d'appui et de verrouillage, ce qui permet de reconstituer deux anneaux rigides au droit des montants, chaque anneau étant composé de la partie correspondante du châssis, des deux montants, du plancher supérieur et des deux verrouillages qui sont serrés lorsque le plancher est à la position désirée.

L'invention est destinée au transport de véhicules, en particulier d'automobiles, par voie routière ou ferroviaire.

**Revendications**

1. Véhicule roulant destiné au transport d'autres véhicules sur au moins deux niveaux, en particulier d'automobiles, du type comportant un châssis (4), un plancher inférieur fixe (5), une superstructure (1), au moins un plancher supérieur (10) mobile verticalement dont le règlage en hauteur est effectué par un dispositif de levage (11) agissant, par l'intermédiaire d'une transmission à distance (12 à 16), en un seul endroit (17) dudit plancher mobile, caractérisé en ce que la superstructure (1) est reliée rigidement au châssis (4) par deux paires de montants (2, 3), au moins une (3) desdites paires étant rentrée par rapport à l'extrémité correspondante du véhicule et étant munie d'orifices (8) d'ancrage, superposés, dudit plancher supérieur mobile, ledit plancher mobile s'étendant sur toute la longueur du véhicule, en ce que ledit endroit d'action (17) dudit dispositif de levage est situé entre le centre de gravité du plancher mobile et l'extrémité du véhicule située du côté de ladite paire de montants rentrée (3), et en ce que le dispositif de levage comporte un treuil (11), ou analogue, fixé audit plancher inférieur (5), le dispositif de transmission à distance associé étant constitué par au moins un cable de levage (12) s'enroulant autour dudit treuil, puis autour au moins d'une première poulie (14) de renvoi à l'horizontale placée sur la superstructure (1) entre ladite paire de montants rentrée (3) et l'extremité correspondante du véhicule puis, après un parcours horizontal, autour d'au moins une deuxième poulie (15) de renvoi, à angle droit et vers le bas, située à la verticale dudit endroit d'action (17).

2. Véhicule selon la revendication 1, caractérisé en ce qu'il comporte deux câbles (12, 13) associés audit treuil (11), ou analogue, et situés de part et d'autre du véhicule (figure 2).

3. Véhicule selon la revendication 1 ou la revendication 2, caractérisé en ce que l'endroit (17) d'action, pris dans le sens longitudinal, du dispositif de levage est situé aux environs du tiers de la partie du plancher mobile (10) située entre son centre de gravité et son extrémite située du côté de ladite paire de montants rentrés (3).

**Claims**

1. Wheeled vehicle intended for transporting other vehicles on at least two levels, in particular motor vehicles, of the type comprising a chassis (4), a fixed lower platform (5), a superstructure (1), at least one upper platform (10) movable vertically and of which height adjustment is carried out by a raising device (11) acting, via a remote transmission system (12 to 16), at one single location (17) on said movable platform, characterised in that the superstructure (1) is rigidly connected to the chassis (4) by two pairs of uprights (2, 3) at least one (3) of said pairs being retracted with respect to the corresponding end of the vehicle, and being provided with super-posed locating passages (8) for said movable upper platform, said movable platform extending over the whole length of the vehicle, and in that said point of action (17) of said raising device is situated between the centre of gravity of the movable platform and the vehicle end at which said pair of retracted uprights (3) is located, and in that the raising device includes a winch (11), or similar device, fixed to said lower platform (5), the associated remotely-located transmission device being made up by at least one raising cable (12) which winds around said winch, then around at least one first pulley (14) for discharging said cable horizontally, this pulley being located on the superstructure (1) between said pair of retracted uprights (3) and the corresponding end of the vehicle, the cable then passing, after following a horizontal path, around at least one second pulley (15) for directing said cable downwardly, said second pulley being vertically in line with said place of action (17).

2. Vehicle according to Claim 1, characterised in that it includes two cables (12, 13) associated with said winch (11), or similar device, situated on one and the other side of the vehicle (Figure 2).

3. Vehicle according to Claim 1, or 2, characterised in that the place of action (17) considering the longitudinal direction, of the raising device is situated in the region of the one-third of the portion of the movable platform (10) located between its centre of gravity and its end where said pair of retracted uprights (3) are mounted.

**Patentansprüche**

1. Fahrzeug für den Fahrzeugtransport und insbesondere für den Autotransport auf mindestens zwei Ladeflächen, bestehend aus einem Fahrgestell (4), einer festen unteren Ladefläche (5), einem Überbau (1), mindestens einer beweglichen oberen Ladefläche (10), die höhenmässig durch eine Hebevorrichtung (11) verstellt wird, welche über eine Fernübertragung (12 bis 16) an nur einer Stelle (17) der beweglichen Ladefläche einwirkt, dadurch gekennzeichnet, dass der Überbau (1) mit dem Fahrgestell (4) durch zwei Pfostenpaare (2,3) starr verbunden ist, wobei mindestens eines (3) dieser Pfostenpaare im Verhältnis zum entsprechenden Fahrzeugende eingerückt und mit übereinander angeordneten Verankerungsöffnungen (8) der genannten beweglichen oberen Ladefläche versehen ist, wobei sich diese bewegliche Ladefläche über die ganze Fahrzeuglänge erstreckt, dass die genannte Wirkungsstelle (17) der genannten Hebevorrichtung zwischen dem Schwerpunkt der beweglichen Ladefläche und dem Fahrzeugende auf der Seite des genannten eingerückten Pfostenpaars (3) gelegen ist und dass die Hebevorrichtung eine Winde (11) oder eine ähnliche Vorrichtung aufweist, die an der genannten unteren Ladefläche (5) befestigt ist, wobei die beigeordnete Fernübertragungsvorrichtung sich zumindest aus einem Hubseil (12) zusammensetzt, das sich um die genannte Winde rollt, dann um mindestens eine horizontale Umlenkscheibe (14), die auf dem Überbau (1) zwischen dem genannten eingerückten Pfostenpaar (3) und dem entsprechenden Fahrzeugende angeordnet ist, dann nach einem waagerechten Verlauf, um mindestens eine zweite Umlenkscheibe (15) im rechten Winkel und nach unten, die senkrecht zur genannten Wirkungsstelle (17) angeordnet ist.

2. Fahrzeug nach Anspruch 1 dadurch gekennzeichnet, dass es zwei Seile (12, 13) aufweist, die mit der genannten Winde (11) oder einer ähnlichen Vorrichtung verbunden sind und sich zu beiden Seiten des Fahrzeugs (Abb. 2) befinden.

3. Fahrzeug nach Anspruch 1 oder Anspruch 2 dadurch gekennzeichnet, dass die Wirkungsstelle (11) der Hebevorrichtung in Längsrichtung betrachtet ungefähr im Drittel des Teils der beweglichen Ladefläche (10) gelegen ist, der sich zwischen dem Schwerpunkt und dem Fahrzeugende auf der Seite des genannten eingerückten Pfostennaars (3) befindet.

FIG. 1

0 005 089

# FIG. 2